# EUROPEAN PATENT APPLICATION

(11) **EP 4 852 339 A1**
(43) Date of publication of application: **09.12.2026**
(21) Application number: 24925610.8
(22) Date of filing: 02.12.2024
(51) Int. Cl.: H04B 7/185, H01Q 21/28

(54) **TERMINAL COMMUNICATION METHOD, STORAGE MEDIUM AND ELECTRONIC APPARATUS**

(30) Priority: 23.02.2024 CN 202410204371
(71) Applicant: ZTE CORPORATION, Shenzhen, Guangdong 518057 (CN)
(72) Inventor: LI, Long, Shenzhen, Guangdong 518057 (CN)
(74) Representative: Mozzi, Matteo
(86) International application number: PCT/CN2024/136176
(87) International publication number: WO 2025/175872

(57) **Abstract**

Embodiments of the present disclosure provide a terminal communication method, a storage medium, and an electronic device. The method includes: performing beam selection on the terminal to determine a communication beam; determining a plurality of communication system antennas for communication according to the communication beam; and combining and multiplexing the plurality of communication system antennas to implement communication between the terminal and a communication satellite.

## Description

### Cross-Reference to Related Application

The present disclosure claims the priority of Chinese Patent Application 202410204371.5, filed on 23 February 2024 and entitled "Terminal Communication Method, Storage Medium and Electronic Apparatus", the disclosure of which is incorporated herein by reference in its entirety for all purposes.

### Technical Field

Embodiments of the present disclosure relate to the field of communications, and in particular, to a terminal communication method, a storage medium, and an electronic device.

### Background

With the development of modern communication technologies, both satellite communications and terrestrial cellular mobile communications are gradually advancing. Satellite communication has unique technical features in that the distance between a satellite and a terminal is very large, resulting in significant space loss, the terminal antenna needs to have features such as high gain and high directivity. This is different from the requirements for terminal antennas in conventional cellular communication systems.

### Summary

Embodiments of the present disclosure provide a terminal communication method, a storage medium, and an electronic device.

According to one embodiment of the present disclosure, provided is a terminal communication method, and the terminal communication method includes: performing beam selection on the terminal to determine a communication beam; determining a plurality of communication system antennas for communication according to the communication beam; and combining and multiplexing the plurality of communication system antennas to implement communication between the terminal and a communication satellite.

According to another embodiment of the present disclosure, further provided is a computer-readable storage medium storing a computer program that, when executed by a processor, implements the steps in any one of the described method embodiments.

According to yet another embodiment of the present disclosure, further provided is an electronic device, including a memory and a processor; the memory stores a computer program, and the processor is configured to execute the computer program so as to implements the steps in any one of the described method embodiments.

### Brief Description of the Drawings

FIG. 1 is a hardware structure block diagram of a mobile terminal in a terminal communication method according to an embodiment of the present disclosure;
FIG. 2 is a flowchart of a terminal communication method according to an embodiment of the present disclosure;
FIG. 3 is a structural block diagram of a terminal communication system according to an embodiment of the present disclosure;
FIG. 4 is a schematic diagram illustrating the principle of a first combining manner for a multiplexed antenna according to an embodiment of the present disclosure;
FIG. 5 is a schematic diagram illustrating the principle of a second combining manner for a multiplexed antenna according to an embodiment of the present disclosure;
FIG. 6 is a flowchart of selecting a multiplexed antenna according to an embodiment of the present disclosure;
FIG. 7 is a schematic diagram illustrating the principle of beamforming according to an embodiment of the present disclosure;
FIG. 8 is a flowchart of beamforming design according to an embodiment of the present disclosure;
FIG. 9 is a flowchart of a first beam pointing adjustment manner according to an embodiment of the present disclosure;
FIG. 10 is a flowchart of a second beam pointing adjustment manner according to an embodiment of the present disclosure;
FIG. 11 is a flowchart of a second beam pointing adjustment manner according to an embodiment of the present disclosure;
FIG. 12 is a schematic diagram of a terminal composition framework according to an embodiment of the present disclosure.

### Detailed Description of the Embodiments

The embodiments of the present disclosure will be described in detail with reference to the accompanying drawings and in conjunction with the embodiments.

It should be noted that, the terms "first", "second" etc. in the description, claims, and accompanying drawings of the present disclosure are used to distinguish similar objects, and are not necessarily used to describe a specific sequence or order.

In the related art, conventional satellite phones generally require external large antennas. However, current mobile terminals focus on compact form factors and typically employ built-in miniaturized antennas, which restricts the performance of satellite communication. Mobile phone terminals with satellite communication capabilities have the problem that antenna performance bottlenecks affect the reliability and quality of satellite communication.

In the related art, satellite phone technologies generally rely on external large antennas, resulting in bulky devices that are inconvenient to carry. Although these technologies provide reliable communication connections, they have significant drawbacks in terms of portability and user-friendliness.

Unlike satellite phones, conventional mobile phones in the related art use built-in small-sized antennas. Although these antennas enable mobile phones to be lightweight and portable, their performance is limited in satellite communication scenarios. They generally cannot provide communication quality and connection reliability comparable to those of external large antennas.

In related art, composite antenna design attempts to improve satellite communication performance by using array antennas. However, due to the limited space of mobile terminals, and with the development of 5G/6G, terminals are required to support multiple radio access technologies and multiple frequency bands simultaneously, leaving insufficient space for satellite communication functions to use independent array antennas.

In the related art, in the design of satellite acquisition operations, under satellite communication scenarios, the performance of the antenna of a mobile terminal depends on the gain performance in the direction pointing to the satellite. However, since the radiation pattern of the mobile terminal varies significantly, it is necessary, during use, to guide the user through a satellite acquisition interface to point the best direction of the antenna of the mobile terminal towards the satellite. This process increases the difficulty of user operations and adversely affects user experience. How to improve the performance of the satellite antenna while maintaining portability within the limited space of a mobile terminal, so as to achieve high quality and high reliability of satellite communication functions and reduce the difficulty of user operations, is a problem that needs to be solved in the industry. In the embodiments of the present disclosure, various existing antennas in a mobile terminal are used as multiplexed antenna elements, and are combined with an independent satellite antenna to form a phased array antenna. Beamforming is performed by controlling phases of signals of respective antennas, so as to generate high-gain beams. Multiple beams are generated according to the features of the antenna array of the terminal, so as to achieve wider spatial coverage. Automatic or manual beam selection functions are provided, which enhances the flexibility and efficiency of satellite communication. The multiplexed antenna in the embodiments of the present disclosure has non-standard antenna features, and the features of each antenna differ significantly. By using an antenna element selection and combination method and a beam selection scheme, efficient, portable and cost-effective satellite communication capability can be achieved within a mobile device, while reducing the complexity of user operations and improving user experience.

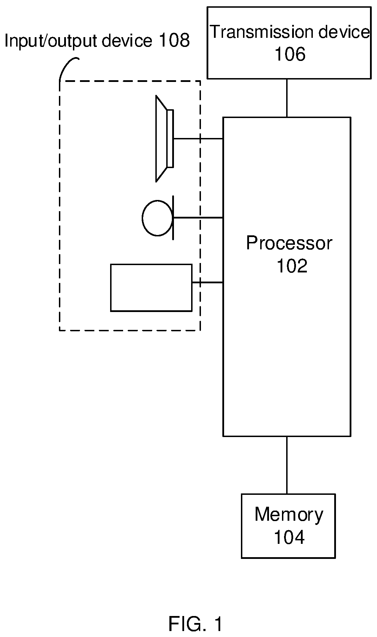

Method embodiments provided in the embodiments of the present disclosure may be executed in a mobile terminal, a computer terminal, or similar computing apparatuses. An example in which the method is executed on a mobile terminal is taken, FIG. 1 is a hardware structure block diagram of a mobile terminal in a terminal communication method according to an embodiment of the present disclosure. As shown in FIG. 1, the mobile terminal may include one or more (only one process is shown in FIG. 1) processors 102 (the processor may include, but is not limited to, a processing device such as a microprocessor (MCU) or a programmable logic device (FPGA)) and a memory 104 configured to store data, wherein the mobile terminal may further include a transmission device 106 for a communication function and an input/output device 108. An ordinary person skilled in the art can appreciate that the structure shown in FIG. 1 is for illustrative purposes only, and does not limit the structure of the mobile terminal. For example, the mobile terminal may further include more or fewer components than that shown in FIG. 1, or have a different configuration than that shown in FIG. 1.

The memory 104 may be configured to store a computer program, for example, a software program and a module of application software, such as a computer program corresponding to the terminal communication method in the embodiments of the present application. The processor 102 executes the computer program stored in the memory 104, so as to execute various function applications and data processing, that is, to implement the foregoing method. The memory 104 may include a high-speed random access memory, and may also include a non-transitory memory, such as one or more magnetic storage devices, flash memories, or other non-transitory solid-state memories. In some instances, the memory 104 may further include memories remotely arranged with respect to the processor 102, and these remote memories may be connected with the mobile terminal over a network. Examples of the described network include, but are not limited to the Internet, an intranet, a local area network, a mobile communication network, and a combination thereof.

The transmission device 106 is configured to receive or transmit data by a network. Specific examples of the described network may include a wireless network provided by a communication provider of the mobile terminal. In an example, the transmission device 106 includes a network interface controller (NIC) that may be coupled to other network devices through a base station, so as to communicate with the Internet. In one example, the transmission device 106 may be a radio frequency (RF) module for communicating wirelessly with the Internet.

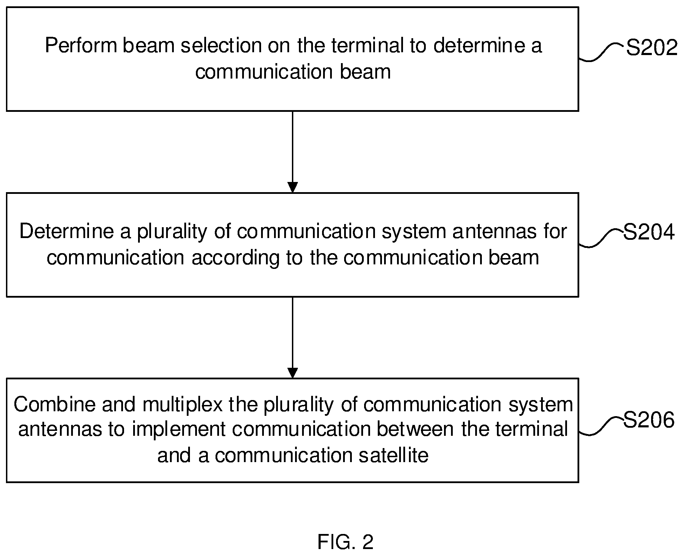

A terminal communication method is provided in an embodiment. FIG. 2 is a flowchart of a terminal communication method according to an embodiment of the present disclosure. As shown in FIG. 2, the method includes following steps:
Step S202: perform beam selection on the terminal to determine a communication beam.

In one embodiment, the terminal can support communication with multiple candidate antennas. Based on the antenna element characteristics of the candidate antennas of the terminal and the working angle of the terminal, beamforming design is performed on the terminal, so that multiple beams satisfying the communication requirements of the terminal can be obtained. During actual communication of the terminal, one beam is selected from the multiple beams for communication. The beam selected for communication is the communication beam. The communication beam may be selected and determined in combination with factors such as beam gain or signal strength, which will be described in detail later.

In an exemplary embodiment, before step S202, the method further includes: acquiring antenna element characteristics of a candidate antenna; and performing beamforming on the terminal according to the antenna element characteristics and a working angle of the terminal, so as to acquire a plurality of beams.

In one embodiment, the process of performing beamforming on the terminal according to the antenna element characteristics and the working angle of the terminal is as follows: selecting, according to the antenna element characteristics of each candidate antenna and in conjunction with the working angle of the terminal determined based on the usage scenario of satellite communication, candidate antennas that can satisfy the requirements of the satellite system; the selected candidate antennas are exhaustively combined to obtain antenna array combinations; thereafter, the composite beam features of all the above antenna array combinations within a preset upper hemispherical working angle of the terminal are calculated, and m beams therefrom are selected to cover the working angle required by the terminal.

In one embodiment, the working angle is an upper hemisphere working angle. For each terminal, before beam selection is performed to determine a communication beam, beamforming design needs to be performed. In one embodiment, the beamforming principle of the antenna array is based on precise phase control of electromagnetic waves transmitted by each individual antenna element in the array. In one embodiment, the communication beams of the terminal are radiated outward in all directions with the terminal as the center. In an actual implementation, communication satellites and the like are generally located above the terminal. Therefore, the communication beams used by the terminal to communicate with the communication satellites, with the terminal as the center, can all be considered as being directed upward relative to the terminal, including being directed vertically upward or obliquely upward. Accordingly, for the terminal, the working angles of the terminal form a spherical surface. In a case where communication satellites and the like are generally located above the terminal, the working angles of the terminal form an upper hemispherical surface, i.e., the upper-hemisphere working angles of the terminal.

In one embodiment, the antenna element characteristics generally include at least one of the following: antenna gain, antenna radiation pattern, antenna phase features, and antenna frequency response. According to the above antenna element characteristics, and in conjunction with the application scenarios of satellite communications, antenna elements capable of satisfying the requirements of the satellite system are selected. For example, antenna elements having relatively good antenna gain when the terminal is held by a user may be selected as the antenna elements used for beamforming. The selected antenna elements are then exhaustively combined to obtain antenna array combinations. Subsequently, the composite beam features of all the above antenna array combinations within the preset upper-hemisphere working angle range of the terminal are calculated, and m beams are selected therefrom to cover the working angles required by the terminal.

In an exemplary embodiment, performing beam selection on a terminal to determine a communication beam includes: performing polling detection on the signal strength of signals received from the communication satellite by each of the plurality of beams; and selecting a beam corresponding to the maximum signal strength as the communication beam.

In one embodiment, when determining a communication beam, closed-loop beam control may be adopted. The terminal periodically perform polling detection on the satellite signal strength received by all beams, and selects the beam having the optimal signal strength to communicate with the satellite. This process can be performed repeatedly. It not only eliminates the need for user involvement in satellite acquisition operations, but also uses the actual satellite signal strength instead of the pre-configured beam directional features, thereby enabling more accurate adjustment of the received beam.

In an exemplary embodiment, the performing beam selection on the terminal to determine a communication beam includes: acquiring location information and orientation information of the terminal; and determining the communication beam according to the location information and the orientation information of the terminal.

In one embodiment, the location and orientation of the mobile phone terminal are continuously monitored. Monitoring the location is typically implemented using an integrated GPS or other location-based services. The monitoring of the orientation of the mobile phone is typically implemented by using integrated geomagnetic and acceleration sensors to obtain the relative position of the mobile phone with respect to the horizontal plane and the direction of gravity. The location information of the terminal can provide the latitude and longitude of the terminal, thereby obtaining the azimuth angle and elevation angle of the communication satellite. The orientation information of the terminal is configured to determine the absolute direction of the beam in the current handheld state, namely, the pointing direction of the peak of the terminal's operating beam.

In an exemplary embodiment, after performing beam selection on the terminal to determine a communication beam, the method further includes: obtaining an azimuth angle and an elevation angle of the communication satellite relative to the terminal according to the location information of the terminal; acquiring a peak pointing direction of the communication beam of the terminal according to the orientation information of the terminal; and adjusting the peak pointing direction of the communication beam according to the azimuth angle and the elevation angle, so as to realize communication between the terminal and the communication satellite.

In one embodiment, the communication beam described above refers to a unique and determined beam, which is the beam with the highest gain selected from the m beams. In one embodiment, when determining the communication beam, static beam open-loop beam control is adopted. The beam with the highest gain is selected as the communication beam. On the user interface, the user is guided to point the beam towards the direction of the currently available communication satellite according to the azimuth angle and elevation angle of the communication satellite relative to the terminal. This approach requires user's participation in the satellite acquisition operation.

In an exemplary embodiment, the determining the communication beam according to the location information and the orientation information of the terminal includes: acquiring relative location information between the terminal and the communication satellite according to the location information of the terminal; acquiring a pointing direction of each beam of the terminal according to the orientation information of the terminal; and acquiring a signal gain of each beam in the direction of the communication satellite according to the relative location information and the pointing direction of each beam, and selecting a beam corresponding to the maximum signal gain as the communication beam.

In one embodiment, when determining the communication beam, dynamic beam open-loop beam control may be adopted. Based on the current hand-holding orientation of the user, the terminal determines which beam among all the beams has the highest gain in the direction of the satellite, and invokes that beam for operation. After the user's hand-holding orientation changes, the determination is performed again, and the currently optimal beam is always invoked for operation. This process can be continuously performed, thereby achieving the effect of tracking the satellite with the beam, without requiring the user to perform satellite acquisition operations.

Step S204: determine a plurality of communication system antennas for communication according to the communication beam.

In one embodiment, after the communication beam is determined, the communication system antennas involved in forming the communication beam can be determined. The communication system antennas involved in forming the communication beam may include an independent satellite antenna or a multiplexed antenna.

Step S206: combine and multiplex the plurality of communication system antennas to implement communication between the terminal and a communication satellite.

In one embodiment, after the communication system antennas are determined according to the communication beam, the phases of the transmission links of the communication system antennas are changed according to phase shift parameters, thereby completing beamforming of the determined plurality of communication system antennas. The determined plurality of communication system antennas are then combined and multiplexed.

In an exemplary embodiment, the combining and multiplexing the communication system antennas includes: combining and multiplexing the plurality of communication system antennas by means of an antenna switch and/or a diplexer.

In one embodiment, for other communication system antennas whose frequency bands are spaced far apart from the satellite communication frequency band, in addition to using an antenna switch for combining, a diplexer may also be used for combining. In this way, the antenna can be simultaneously used by both a satellite circuit and a non-satellite circuit. A diplexer is applicable to scenarios in which signals of different frequencies share the same antenna. In such scenarios, two paths of signals can operate simultaneously. For other communication system antennas whose frequency bands are close to the satellite communication frequency band, the combining is achieved by switching an antenna switch. The use of the antenna switch prevents the two paths of signals from operating simultaneously, such that the paths of signals operate in an alternating manner. In this case, different types of communication system antennas are provided to the satellite circuit or the non-satellite circuit alternately.

In an exemplary embodiment, in a first case where a difference between a communication frequency band of the communication system antenna and a communication frequency band of the communication satellite is less than a first preset frequency band threshold, multiple communication system antennas for the first case among the plurality of communication system antennas are combined by means of the antenna switch; or, in a second case where the difference between the communication frequency band of the communication system antenna and the communication frequency band of the communication satellite is greater than a second preset frequency band threshold, multiple communication system antennas for the second case among the plurality of communication system antennas are combined by means of the diplexer. In this process, the use of the diplexer can satisfy the scenario where signals of different frequencies share the same antenna. In this scenario, the two signals can operate simultaneously, which ensures communication efficiency, and also guarantees that when one path of the signals is conducted, the other path of signal can remain active without interruption, thereby avoiding disconnection. When an antenna switch is used, the two paths of signals cannot operate simultaneously and need to operate alternately. By adopting the described design of a diplexer or an antenna switch, different scenario requirements can be satisfied, thereby enhancing the flexibility of terminal use.

By means of the described steps, a terminal communication method is provided, including: determining a communication beam by performing beam selection on the terminal; determining, according to the communication beam, a plurality of communication system antennas for communication; and combining and multiplexing the plurality of communication system antennas to implement communication between the terminal and a communication satellite. The foregoing solves the problems in the related art that communication operations between a terminal and a communication satellite are difficult to perform and that user experience is poor, and achieves the effects of reducing the difficulty of performing communication operations between the terminal and the communication satellite, thereby improving user experience.

From the description of the described embodiments, a person skilled in the art would be able to clearly understand that the method in the described embodiments may be implemented by using software and necessary general hardware platforms, and of course may also be implemented using hardware, but in many cases, the former is a better implementation manner. Based on such understanding, the technical solutions of the embodiments of the present disclosure, or in other words, the part of the technical solutions making contributions to the prior art, may be embodied in the form of a software product stored in a storage medium, including a number of instructions for enabling a terminal device to perform the methods described in various embodiments of the present disclosure.

Embodiments of the present disclosure further provide a terminal communication apparatus, the apparatus is configured to implement the described embodiments and preferred embodiments, and what has been described will not be described repeatedly here. As used below, the term "module" may implement a combination of software and/or hardware of predetermined functions. Although the apparatus described in the following embodiments is preferably implemented in software, implementation in hardware or a combination of software and hardware is also possible and conceived.

The terminal communication apparatus provided in the embodiments of the present disclosure can be provided in a terminal, and includes: a beam selection module, configured to perform beam selection on the terminal to determine a communication beam; an antenna selection module, configured to determine a plurality of communication system antennas for communication according to the communication beam; and a communication module, configured to combine and multiplex the plurality of communication system antennas to implement communication between the terminal and a communication satellite. In an embodiment, different functional modules are provided in the terminal communication apparatus to implement the steps of the terminal communication method in the foregoing embodiments. In an actual implementation, the names and functional divisions of the modules are not specifically limited, as long as the terminal communication method in the foregoing embodiments can be implemented.

It should be noted that, the modules above may be implemented by software or hardware, and the latter may be implemented in the following manner, but is not limited thereto. All the modules above are located in the same processor; or all the modules above are located in different processors in any arbitrary combination manner.

The embodiments of the present disclosure further provide a computer-readable storage medium storing a computer program, wherein the computer program is configured to perform, when being executed, the steps in any one of the described method embodiments.

In an exemplary embodiment, the computer-readable storage medium may include, but is not limited to, a USB flash disk, a read-only memory (ROM), a random access memory (RAM), a removable hard disk, a magnetic disk, an optical disk, or any medium that can store a computer program.

The embodiments of the present disclosure further provide an electronic device, including a memory and a processor; the memory stores a computer program, and the processor is configured to execute the computer program, so as to perform the steps in any one of the method embodiments.

In an exemplary embodiment, the electronic device can further include a transmission device and an input/output device, wherein the transmission device is connected with the processor, and the input/output device is connected with the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present disclosure can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual integrated circuit modules, or they can be implemented by making a plurality of the modules or steps into a single integrated circuit module. Thus, the present disclosure is not limited to any specific combination of hardware and software.

In order to enable those skilled in the art to better understand the technical solutions of the present disclosure, descriptions thereof will be given below with reference to specific scenario embodiments.

### Embodiment I

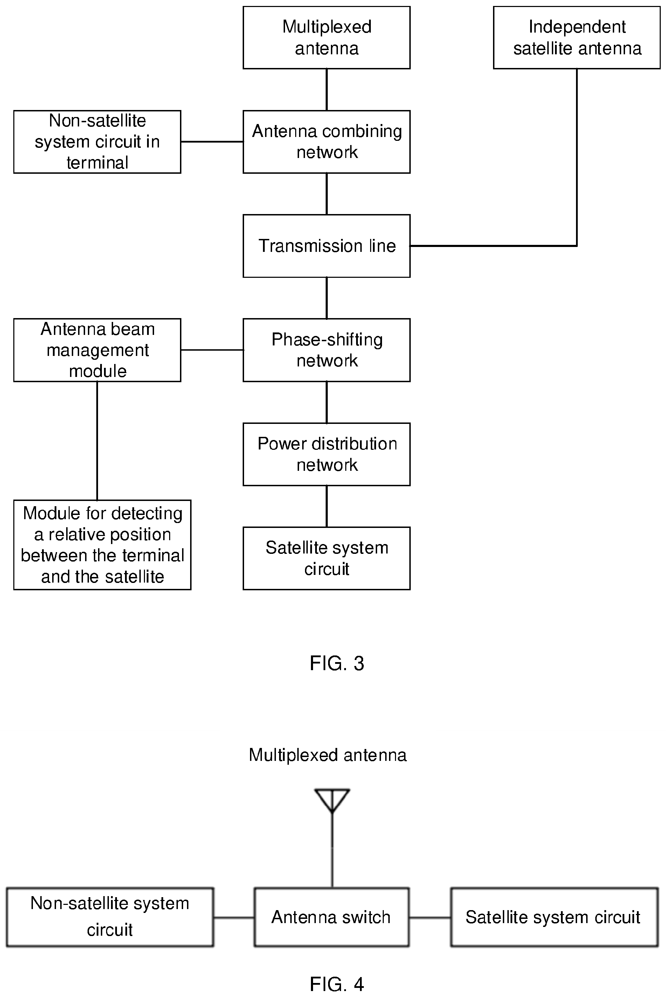

FIG. 3 is a structural block diagram of a terminal communication system according to an embodiment of the present disclosure. As shown in FIG. 3, the terminal communication system includes a feed network, an antenna beam management module, a module for detecting a relative position between the terminal and the satellite. The feed network includes a feed source, a power distribution network, a phase-shifting network, a transmission line, and an antenna combining network, wherein the feed source is provided by a satellite system circuit. The antenna combining network includes a non-satellite system circuit and an independent satellite antenna in the terminal. A multiplexed antenna is formed by means of a diplexer or an antenna switch.

As an important structure of the terminal communication system, the feed network is configured to effectively distribute signals to each antenna element. By cooperating with the antenna beam management module, the feed network enables each antenna element to receive or transmit a specific signal via the network, such that the entire array can form a plurality of independent beams for satellite communication of the terminal.

The feed source is the starting point of the feed network and is provided by the satellite system circuit, and is configured to provide a radio frequency signal to be distributed to the entire antenna array. This signal is typically generated by a transceiver and then connected with each antenna element by means of the feed network.

The power distribution network is the core of the feed network, and is configured to distribute the signal from the feed source to each antenna element according to a required power ratio. The power distribution network can split one signal into N signals as required. Each signal is converted into a signal with a specific phase by means of the phase-shifting network, and is then fed into different antennas by means of transmission lines. The power distribution network can ensure that signal loss during the distribution process is minimized, and that the phase and amplitude of the signal received by each antenna element are accurately controlled as required.

The phase-shifting network is located in the path of the feed network, and is configured to adjust the phase differences of the signal between different antenna elements. By adjusting these phase differences, the beam direction of the antenna array can be controlled. The core of the phase-shifting network is a phase shifter, which may be an analog phase shifter, such as a positive-intrinsic-negative (PIN) diode, or a digital phase shifter, such as a micro-electro-mechanical system (MEMS) device.

The antenna combining network combines different signals into the same antenna by means of an antenna switch and/or a diplexer, so as to achieve antenna multiplexing.

The antenna beam management module is configured to coordinate the entire feed network, including storing preset beam parameters and invoking the parameters to control the phase shifters, so that the antenna array can achieve precise beam pointing as required.

In one embodiment, by multiplexing the various antennas within the terminal and using a beamforming method, multiple high-gain satellite antenna beams are generated to meet the high performance requirements of satellite communication for ground handheld terminals. The satellite antenna is multiplexed with other built-in antennas of the mobile phone (including 2G/3G/4G/5G antennas, Wi-Fi/Bluetooth antennas, GPS antennas, Near Field Communication (NFC) antennas, etc.). Currently, the existing terminals that support satellite communication functions are also provided with additional independent satellite antennas. Combining design is required for the satellite antenna and the other antennas.

There are two ways to combine the satellite antenna and the other antennas: one way of combing is by means of a diplexer, and the other way of combing is by means of an antenna switch. For other communication system antennas whose frequency bands are spaced far apart from the satellite communication frequency band, in addition to using an antenna switch for combining, a combiner may also be used for combining. In this way, the antenna can be simultaneously used by both a satellite circuit and a non-satellite circuit. A diplexer is applicable to scenarios in which signals of different frequencies share the same antenna. In such scenarios, the two signals can operate simultaneously. For other communication system antennas whose frequency bands are close to the satellite communication frequency band, the combing is performed by means of an antenna switch. The use of the antenna switch prevents the two signals from operating simultaneously, requiring them to work in an alternating manner. In this case, different types of communication system antennas are provided to the satellite circuit or the non-satellite circuit alternately.

FIG. 4 is a schematic diagram illustrating the principle of a first combining manner for a multiplexed antenna according to an embodiment of the present disclosure. As shown in FIG. 4, an antenna switch is used for combining a non-satellite system circuit and a satellite system circuit.

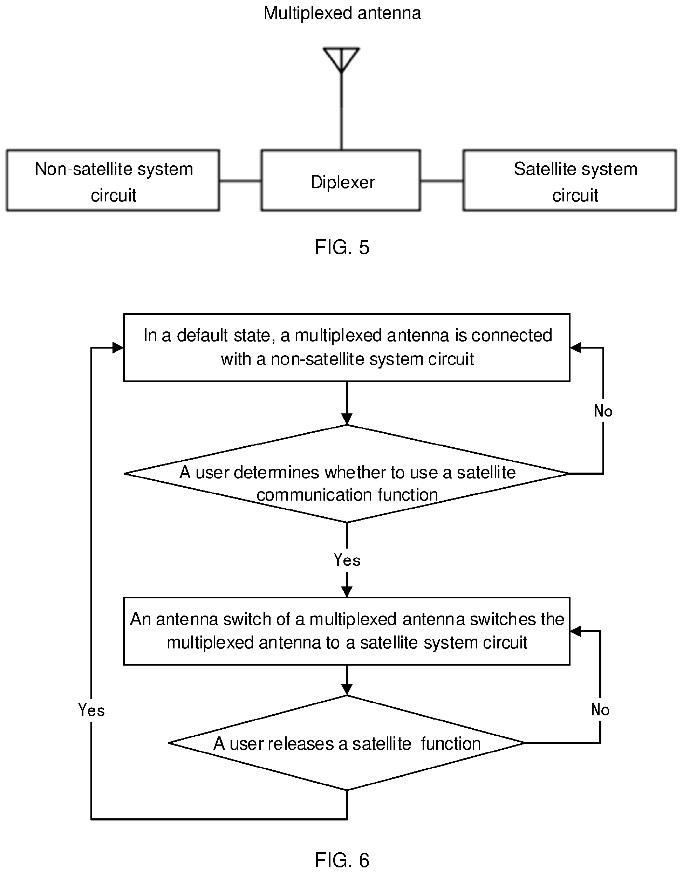

FIG. 5 is a schematic diagram illustrating the principle of a second combining manner for a multiplexed antenna according to an embodiment of the present disclosure. As shown in FIG. 5, a diplexer is used for combining a non-satellite system circuit and a satellite system circuit.

FIG. 6 is a flowchart of selecting a multiplexed antenna according to an embodiment of the present disclosure. As shown in FIG. 6, in an antenna combining mode of using an antenna switch, the default state is that the multiplexed antenna is connected with the non-satellite system circuit. When the user selects to use the satellite communication function, the antenna switch of the multiplexed antenna switches the multiplexed antenna to the satellite system circuit. When the user releases the satellite communication function, the antenna switch of the multiplexed antenna switches back to the non-satellite system circuit.

### Embodiment II

For each terminal, before beam selection is performed to determine a communication beam, beamforming design needs to be performed. In embodiment II, the steps of the beamforming design will be described in detail.

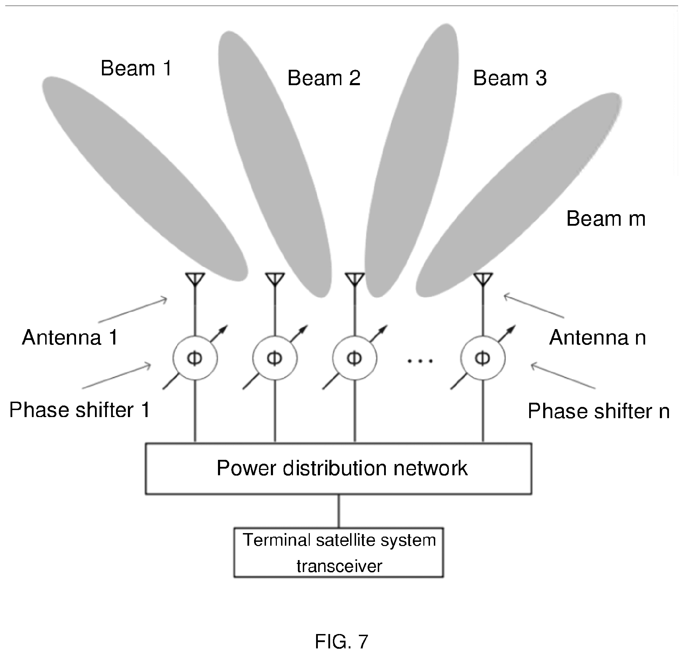

The beamforming principle of the antenna array is based on precise phase control of electromagnetic waves transmitted by each individual antenna element in the array. FIG. 7 is a schematic diagram illustrating the principle of beamforming according to an embodiment of the present disclosure. As shown in FIG. 7, the beamforming principle can be summarized as the following several key points:
(1) Phase control: the electromagnetic wave transmitted by each antenna element has a specific phase. By changing these phases, the direction of the beam can be controlled. For example, in a case where the phases of the transmission chains of all antenna elements are the same, the beam will propagate straight ahead; and in a case where the phases change gradually, the beam will be steered to one side.
(2) Beam formation: when multiple antenna elements transmit electromagnetic waves simultaneously, these waves will superimpose on each other in space. By adjusting the phase of the transmission signal of each antenna element, these waves can be made to constructively interfere in a specific direction, forming a strong signal, while destructively interfering in other directions, forming weak signals.
(3) Dynamic beamforming: a phased array antenna is able to dynamically change the beam direction without physically moving the antenna. This is achieved by electronically and rapidly adjusting the phases of the various antenna elements. This flexibility makes the phased array antenna very suitable for tracking moving objects.
(4) Beam width control: the width of a beam depends on the number and arrangement of antenna elements. Generally, the more antenna elements there are, the larger the array is, and the more concentrated the beam can be, that is, the narrower the beamwidth is.

In one embodiment, multiple beams with different performance features will be generated through the above design. These beams differ in directivity, gain, and beamwidth. In actual use, different beams are invoked as needed.

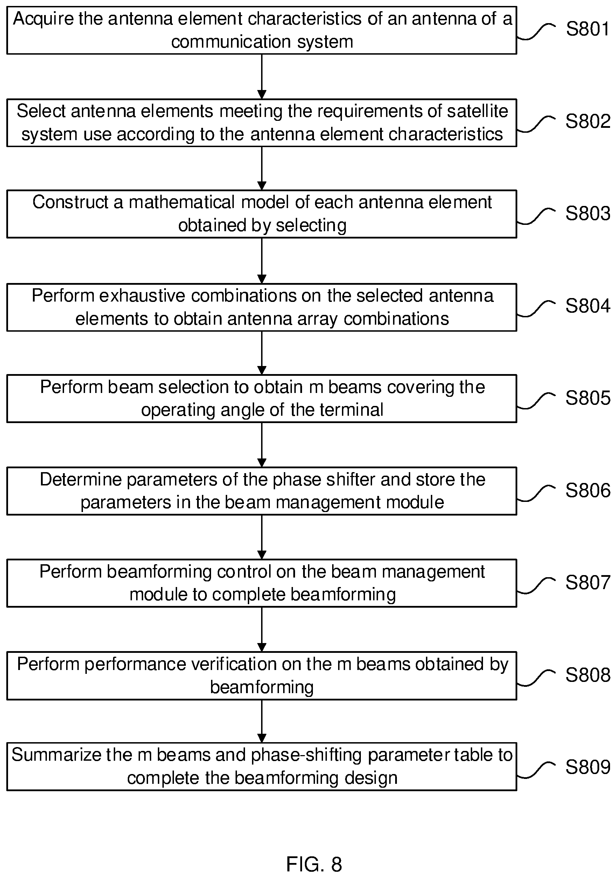

FIG. 8 is a flowchart of beamforming design according to an embodiment of the present disclosure. As shown in FIG. 8, the method includes the following steps:
Step S801: acquire the antenna element characteristics of communication system antennas.

The characteristics of each antenna element generally include its gain, radiation pattern, phase characteristics, frequency response, and the like. The steps for extracting these characteristics are as follows: (1) single antenna element measurement: a network analyzer is used in an anechoic chamber to individually measure each antenna element, thereby obtaining parameters such as frequency response, gain, and phase characteristics. (2) Antenna element selecting: the antenna elements that meet the requirements of the satellite system may be selected based on the measured performance parameters of the antenna elements. It is usually considered to select, within the angular range in which the satellite terminal is suitably oriented toward the satellite in a handheld state, antenna elements that have better performance within this angular range for beam design. (3) Model construction: mathematical models of each selected antenna element are constructed based on the measurement data. These models can be used to simulate and predict the performance of the antenna elements under different conditions.

Step S802: select antenna elements meeting the requirements of satellite system according to the antenna element characteristics.

Beamforming involves integrating antenna elements with different characteristics into a unified array, to form the desired beam direction and shape.

First, designing the array layout, which includes selecting antenna elements that can satisfy the requirements for satellite system use based on the measured antenna element characteristics of each antenna element and in conjunction with the usage scenarios of satellite communication, and selecting antenna elements that have better gain in the upper hemisphere in the handheld state as beamforming antenna elements. These antenna elements are defined as "antenna 1" to "antenna n".

Step S803: construct a mathematical model of each antenna element obtained by selecting.

Step S804: perform exhaustive combinations on the selected antenna elements to obtain antenna array combinations.

Antenna group predefinition: combining the above antenna elements, which include an antenna group having only one antenna element, an array group having two antenna elements, an array group having three antenna elements, ... , an array group having n antenna elements. For the array group having more than one antenna element, the antenna elements therein are permuted and combined to exhaust all possible antenna combinations.

Step S805: perform beam selection to obtain m beams covering the working angle of the terminal.

By means of computer simulation, the composite beam characteristics of all the above antenna combinations within the preset upper-hemisphere working angle range of the terminal are calculated. These characteristics mainly include gain, peak direction, pattern width, and the like. m beams are selected to cover the desired working angle of the terminal. These beams are defined as "beam 1" to "beam m". The phase parameters from the feed source to the feed point of each antenna element, i.e., the ideal phase parameters, are recorded.

Step S806: determine parameters of the phase shifter and store the parameters in the beam management module.

The original phase parameters from the feed source to the feed point of each antenna element are measured. A difference value is calculated between the recorded ideal phase parameters obtained for each beam during beam selecting and the measured original phase parameters on the respective same paths, so as to obtain the phase parameters required for each phase shifter. These are recorded as a "phase-shifting parameter table" for each beam and stored in the beam management module.

Step S807: perform beamforming control on the beam management module to complete beamforming.

The beam management module retrieves the "phase-shifting parameter table" according to the beam number to be used, and transmit it to each phase shifter unit to complete the beamforming of the antenna array.

Step S808: perform performance verification on the m beams obtained.

The performance of each of the above beams is verified by means of actual measurements in an anechoic chamber, so as to ensure that the beamforming satisfies the design requirements. If there is a deviation from the target, the "phase-shifting parameter table" is fine-tuned.

Step S809: summarize the m beams and a phase-shifting parameter table to complete the beamforming design.

By means of the foregoing process, m beams and a "phase-shifting parameter table" corresponding to each beam are obtained. A beam information table as shown in Table 1 can be obtained, thereby completing the beam design.

**Table 1 Beam Information Table**

| Beam No. | Φ range | Θ range | Phase-shifting parameters of phase shifter 1 | Phase-shifting parameters of phase shifter 2 | ...... | Phase-shifting parameters of phase shifter n | Gain |
|---|---|---|---|---|---|---|---|
| Beam 1 | Φ1~Φ2 | Θ1~Θ2 | Phi1-1 | Phi2-1 | ...... | Phin-1 | G1 |
| Beam 2 | Φ2~Φ3 | Θ2~Θ3 | Phi1-2 | Phi2-2 | ...... | Phin-2 | G2 |
| Beam 3 | Φ3~Φ4 | Θ3~Θ4 | Phi1-3 | Phi2-3 | ...... | Phin-3 | G3 |
| ...... | ...... | ...... | ...... | ...... | ...... | ...... | ...... |
| Beam m | Φm~Φm+1 | Θm~Θm+1 | Phi1-m | Phi2-m | ...... | Phin-m | Gm |

As shown in Table 1, each beam has optimal gain characteristics within the defined Φ and Θ angular ranges, and all the Φ and Θ angular ranges together cover the satellite communication usage scenarios. The Φ and Θ angular ranges may respectively correspond to the longitude direction and latitude direction of the upper-hemisphere working angle of the terminal.

After the beamforming design is completed, in order to ensure that satellite communication remains normal when the mobile terminal is moving, by means of a beam management scheme, the beams that meet the requirements can be selected for communication with the satellite. The beam management scheme provided in the embodiments of the present disclosure includes:
(1) terminal location and orientation monitoring:
   first, the location and orientation of the mobile terminal need to be continuously monitored. Monitoring the location is typically implemented using an integrated GPS or other location-based services. The monitoring of the orientation of the mobile phone is typically implemented by using integrated geomagnetic and acceleration sensors to obtain the relative position of the mobile phone with respect to the horizontal plane and the direction of gravity. The location information of the terminal can provide the latitude and longitude of the terminal, thereby obtaining the azimuth angle and elevation angle of the communication satellite at the terminal's location. The orientation information of the terminal is used to determine the absolute direction of the beam in the current handheld state, namely, the pointing direction of the peak of the terminal's operating beam.
(2) Beam pointing direction adjustment:
   Based on the current location of the terminal, the orientation of the satellite relative to the terminal is acquired. The satellite communication system needs to adjust the beam pointing in real time to ensure that the beam of the terminal is always aligned with the satellite with which the terminal needs to communicate. This may be achieved by:

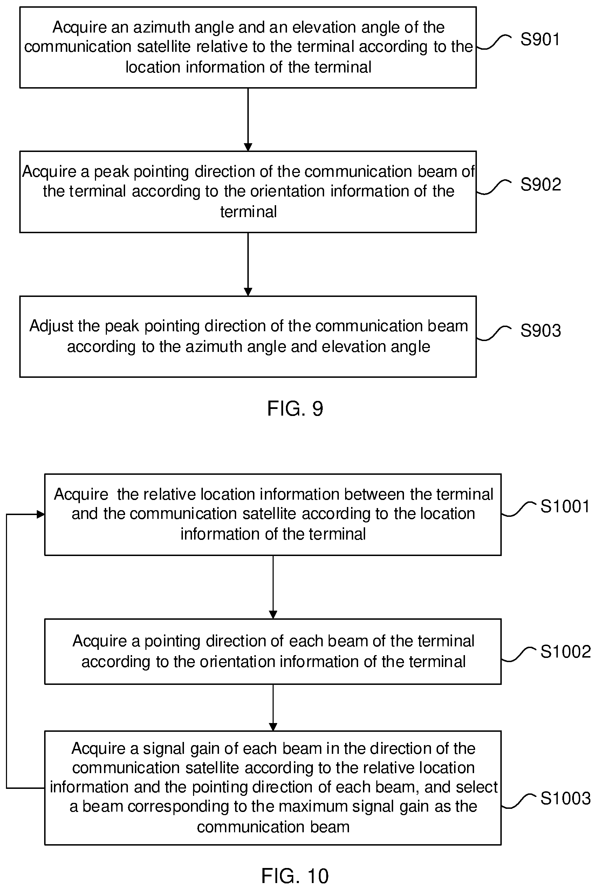

   FIG. 9 is a schematic flowchart of a first beam pointing adjustment manner according to an embodiment of the present disclosure. As shown in FIG. 9, performing static beam open-loop beam control includes:
   Step S901: acquire an azimuth angle and an elevation angle of the communication satellite relative to the terminal according to the location information of the terminal.

In the static mode, a beam with optimal performance is selected as the communication beam. The location of the serving satellite relative to the terminal is calculated based on the geographic location of the terminal, wherein the communication beam is within the coverage range of m beams.

Step S902: acquire a peak pointing direction of the communication beam of the terminal according to the orientation information of the terminal.

The peak pointing direction of the communication beam of the terminal is determined according to the terminal orientation detected by the built-in sensors of the terminal.

Step S903: adjust the pointing direction of the communication beam peak value according to the azimuth angle and elevation angle.

The user interface is used to guide the user to orient the peak of the selected communication beam towards the direction of the communication satellite, so as to enable communication with the communication satellite.

In the static beam open-loop beam control shown in FIG. 9, the beam with the highest gain is selected as the communication beam, and the user is guided on the user operation interface to point the beam toward the direction of the currently available satellite. This approach requires the user to participate in the satellite acquisition operation, that is, the user aligns the peak of the communication beam with the direction of the communication satellite according to guidance prompts provided by the user interface. In actual implementation, the working angle coverage range of the terminal is determined based on the terminal position information, and then the beams that satisfy the requirements of the working angle coverage range of the terminal are determined. The beam with the strongest gain among those satisfying the requirements is selected as the communication beam.

FIG. 10 is a flowchart of a second beam pointing adjustment manner according to an embodiment of the present disclosure. As shown in FIG. 10, performing dynamic beam open-loop beam control includes:
step S1001: acquire the relative location information between the terminal and the communication satellite according to the location information of the terminal.

The location of the serving satellite relative to the terminal is calculated based on the geographic location of the terminal.

Step S1002: acquire a pointing direction of each beam of the terminal according to the orientation information of the terminal.

The pointing direction of each beam of the terminal is determined according to the terminal orientation detected by the built-in sensors of the terminal and the radiation pattern characteristics of each beam.

Step S1003: acquire a signal gain of each beam in the direction of the communication satellite according to the relative location information and the pointing direction of each beam, and select a beam corresponding to the maximum signal gain as the communication beam.

The beam having the highest gain toward the direction of the current satellite among all beams is automatically invoked for communication with the satellite.

In the dynamic beam open-loop beam control illustrated in FIG. 10, based on the current hand-holding orientation of the user, it is determined which beam among all the numbered beams has the strongest gain towards the direction of the satellite, and this beam is invoked for operating. When the user's hand-holding orientation changes, the determination is performed again, and the currently optimal beam is always invoked for operation. This process can be continuously performed, thereby achieving the effect of tracking the satellite with the beam, without requiring the user to perform satellite acquisition operations.

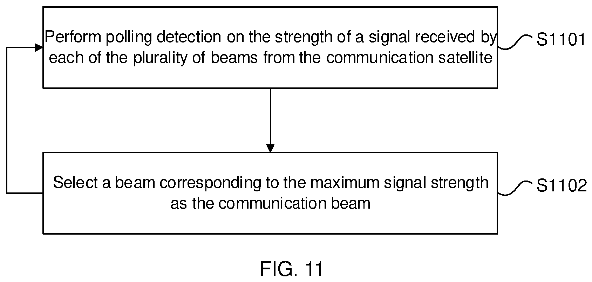

FIG. 11 is a flowchart of a second beam direction adjustment manner according to an embodiment of the present disclosure. As shown in FIG. 11, closed-loop beam control is performed, which includes polling detection on the signal strengths of the satellite signals received by all beams, and selecting the beam having the optimal signal strength for communication with the satellite, which specifically includes following steps:
step S1101: perform polling detection on the strength of a signal received by each of the plurality of beams from the communication satellite; and
step S1102: select a beam corresponding to the maximum signal strength as the communication beam.

In the closed-loop beam control shown in FIG. 11, the terminal periodically performs polling detection on the satellite signal strength received by all beams, and selects the beam having the optimal signal strength for communication with the satellite. This process can be performed repeatedly, such that the user does not need to involve in satellite acquisition operations, and the actual satellite signal strength is used instead of the pre-configured beam directional features, thereby enabling more accurate adjustment of the received beams.

### Embodiment III

In Embodiment III, a specific terminal structure example is provided, and a terminal communication method in an embodiment of the present disclosure will be described.

FIG. 12 is a schematic diagram of a terminal composition framework according to an embodiment of the present disclosure. As shown in FIG. 12, two antennas participate in beamforming of a satellite antenna array. One of the antennas is an independent satellite antenna element, and the other one is an antenna originally used for 5G n78, which is now connected by means of a diplexer to be shared with the satellite, with one path of signal coming from the n78 radio frequency circuit and the other path of signal from the satellite radio frequency circuit. The satellite radio frequency circuit generates two paths of signals by means of a power divider, and the two paths of signals are phase-shifted and then connected with the "multiplexed antenna element for n78 and satellite" and the "independent satellite antenna element". The beam management module retrieves the pre-stored beam parameters according to the data obtained from terminal location detection and orientation detection, and controls the two phase shifters to the phases corresponding to the desired beam. The pre-stored beams originate from the beam design process.

In one embodiment, the beam design involves testing the performance of a single antenna in an anechoic chamber and selecting two antenna elements located at the top as the satellite antenna array. This is because, on one hand, the antennas at the top are less likely to be blocked in a hand-holding state, and on the other hand, the top antenna elements have good performance in the upper hemisphere when configured for satellite communication. In one embodiment, the "multiplexed antenna element for n78 and satellite" is defined as "antenna 1", and the "independent satellite antenna element" is defined as "antenna 2". The possible antenna combinations obtained through exhaustive enumeration include three combinations: "antenna group 1", "antenna group 2", and "antenna group 1 + antenna group 2".

Next, by means of computer simulation, different phase-shifting tests are designed for each antenna combination, and the beam characteristics in various combination scenarios are calculated. For the single antenna element, the default phase-shifting parameters of the "antenna group 1" and the "antenna group 2" are 0. After completing the simulation calculation, the following m beams and corresponding beam information table are obtained, as shown in Table 2.

**Table 2 Exemplary Beam Information Table**

| Beam No. | Φ range | Θ range | Phase-shifting parameters of phase shifter 1 | Phase-shifting parameters of phase shifter 2 | Gain |
|---|---|---|---|---|---|
| Beam 1 | Φ1~Φ2 | Θ1~Θ2 | Phi1-1 | Phi2-1 | G1 |
| Beam 2 | Φ2~Φ3 | Θ2~Θ3 | Phi1-2 | Phi2-2 | G2 |
| Beam 3 | Φ3~Φ4 | Θ3~Θ4 | Phi1-3 | Phi2-3 | G3 |
| ...... | ...... | ...... | ...... | ...... | ...... |
| Beam m | Φm~Φm+1 | Θm~Θm+1 | Phi1-m | Phi2-m | Gm |

Table 2 records the coverage angle ranges and phase-shifting parameter tables corresponding to the beam numbers. In this embodiment, since there are only two antenna elements, only two phase shifters and the corresponding phase-shifting parameters are required. These data can be stored in the beam management module.

In actual implementation, when the user turns on the satellite communication function, the beam management module invokes the information provided by the terminal location detection circuit and the terminal orientation detection circuit, calculates the location of the terminal relative to the satellite, selects the optimal beam based on the stored beam information data, and transmits its phase shifter parameters to the corresponding phase shifters to complete beamforming.

In the static beam open-loop beam control mode, the beam with the highest gain in Table 2 is selected as the operating beam. The beam management module retrieves the corresponding phase-shifting parameters and transmits them to the phase shifters to form a composite beam, and the UI guides the user to point the beam toward the satellite direction.

In actual implementation, for an exemplary scenario, the process of selecting the beam with the highest gain in Table 2 as the operating beam includes: for a certain terminal, it is determined based on the terminal location information that its working angle coverage range falls within Φ1 to Φ4 in the longitude direction of the upper-hemisphere working angle range of the terminal. According to Table 2, the beams selectable for this terminal are beam 1, beam 2 and beam 3. Then, based on Table 2, the beam with the highest gain among beams 1-3 is selected as the communication beam. In actual implementation, the working angle coverage range of the terminal determined based on the terminal location information is not limited to the above scenario. For example, the working angle coverage range of the terminal may also cover the angular ranges of multiple beams or even all beams, and it is sufficient to select the beam with the strongest gain therefrom.

In a dynamic beam open-loop beam control mode, the beam management module retrieves the terminal location information and orientation information, and, in combination with the coverage areas of each beam in Table 1, and automatically invokes the beam corresponding to the direction of the current satellite for communication with the satellite. The invocation process is also implemented by the beam management module by invoking the corresponding phase-shifting parameters, and transmitting the phase-shifting parameters to the phase shifters to form a composite beam.

In the closed-loop beam control mode, the satellite radio frequency circuit performs polling detection on the signal strength of satellite signals received by all beams in Table 1, and selects the beam having the optimal signal strength in Table 1 for communication with the satellite.

In summary, the embodiments of the present disclosure provide a terminal communication method. The embodiments of the present disclosure relate to the field of integration of mobile communication terminals and satellite communication terminals. The field of mobile communication terminals is currently undergoing a stage of rapid development and maturation. With the widespread adoption of smart phones and mobile devices, this field continues to drive innovation and improvements in global communication technologies. With the maturation of mobile cellular technologies, satellite communication functions have gradually been introduced into mobile terminals. A mobile phone terminal is required to simultaneously support both conventional mobile communication cellular network functions and satellite communication functions. The present disclosure implements a high-performance satellite communication solution on a mobile phone terminal integrating mobile cellular communication and satellite communication, while minimizing the impact on the performance of existing mobile cellular communication.

According to the present disclosure embodiment, the terminal communication method integrates various antennas within the mobile phone terminal with the satellite antenna inside the terminal through beam synthesis technology, forming a high-gain antenna array. By means of an antenna combining design featuring low insertion loss and high isolation, antenna multiplexing is realized, which ensures the normal operation of other communication channels while satisfying the high-performance demands of satellite communication. The embodiments of the present disclosure achieve high reliability and high quality of satellite communication functions in the mobile terminal within the limited space thereof by improving the performance of the satellite terminal antenna, while also reducing the size and weight of the device and enhancing the performance of the satellite antenna without compromising portability. It can also dynamically adjust the antenna direction and gain according to the communication environment, ensuring optimal communication effect, achieving high quality and high reliability of satellite communication functions, and reducing the difficulty of user operations.

The embodiments of the present disclosure open up new possibilities for the satellite communication function of mobile communication devices by means of built-in efficient antenna design. This meets the demand for more efficient and portable satellite communication devices. By means of antenna multiplexing and combining design, feed network design, beamforming technology, beam management technology, and the like, the embodiments of the present disclosure may be able to implement a high-gain satellite antenna array in the terminal, generate a plurality of highly directional beams, and statically or dynamically invoke the beams according to usage scenarios, thereby providing users with a high-performance and user-friendly satellite call experience.

The content above are only preferred embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. A terminal communication method, applied to a terminal, wherein the method comprises:
performing beam selection on the terminal to determine a communication beam;
determining a plurality of communication system antennas for communication according to the communication beam; and
combining and multiplexing the plurality of communication system antennas to implement communication between the terminal and a communication satellite.

2. The method according to claim 1, wherein the combining and multiplexing the plurality of communication system antennas comprises:
combining and multiplexing the plurality of communication system antennas by means of an antenna switch and/or a diplexer.

3. The method according to claim 2, wherein
in a first case where a difference between a communication frequency band of the communication system antenna and a communication frequency band of the communication satellite is less than a first preset frequency band threshold, multiple communication system antennas for the first case among the plurality of communication system antennas are combined by means of the antenna switch;
or, in a second case where the difference between the communication frequency band of the communication system antenna and the communication frequency band of the communication satellite is greater than a second preset frequency band threshold, multiple communication system antennas for the second case among the plurality of communication system antennas are combined by means of the diplexer.

4. The method according to claim 1, wherein before performing beam selection on the terminal to determine the communication beam, the method further comprises:
acquiring antenna element characteristics of a candidate antenna; and
performing beamforming on the terminal according to the antenna element characteristics and a working angle of the terminal, so as to acquire a plurality of beams.

5. The method according to claim 4, wherein the performing beam selection on the terminal to determine a communication beam comprises:
performing polling detection on signal strength of a signal received by each of the plurality of beams from the communication satellite; and
selecting a beam corresponding to a maximum signal strength as the communication beam.

6. The method according to claim 1, wherein the performing beam selection on the terminal to determine a communication beam comprises:
acquiring location information and orientation information of the terminal; and
determining the communication beam according to the location information and the orientation information of the terminal.

7. The method according to claim 6, wherein after performing beam selection on the terminal to determine the communication beam, the method further comprises:
obtaining an azimuth angle and an elevation angle of the communication satellite relative to the terminal according to the location information of the terminal;
acquiring a peak pointing direction of the communication beam of the terminal according to the orientation information of the terminal; and
adjusting the peak pointing direction of the communication beam according to the azimuth angle and the elevation angle, so as to realize communication between the terminal and the communication satellite.

8. The method according to claim 6, wherein the determining the communication beam according to the location information and the orientation information of the terminal comprises:
acquiring relative location information between the terminal and the communication satellite according to the location information of the terminal;
acquiring a pointing direction of each beam of the terminal according to the orientation information of the terminal; and
acquiring a signal gain of each beam in a direction of the communication satellite according to the relative location information and the pointing direction of each beam, and selecting a beam corresponding to a maximum signal gain as the communication beam.

9. A computer-readable storage medium, storing a computer program that, when executed by a processor, implements the method according to any one of claims 1 to 8.

10. An electronic device, comprising a memory, a processor, and a computer program that is stored in the memory and executable by the processor, wherein the processor, when executing the computer program, implements steps of the method according to any one of claims 1 to 8.
